(19) Europäisches Patentamt
European Patent Office
Office européen des brevets

(11) **EP 3 525 192 B1**

(12) **EUROPEAN PATENT SPECIFICATION**

(45) Date of publication and mention
of the grant of the patent:
**20.04.2022 Bulletin 2022/16**

(21) Application number: **16918329.0**

(22) Date of filing: **07.10.2016**

(51) International Patent Classification (IPC):
*G08G 1/16* (2006.01)    *B60W 40/02* (2006.01)
*G01C 21/34* (2006.01)    *G06T 1/00* (2006.01)
*B60W 30/095* (2012.01)    *B60W 30/12* (2020.01)
*B60W 40/06* (2012.01)    *B60W 40/04* (2006.01)

(52) Cooperative Patent Classification (CPC):
**B60W 30/0956; B60W 30/12; B60W 40/04;**
**G01C 21/34; G06T 1/00; G08G 1/16;**
B60W 2520/10; B60W 2554/80

(86) International application number:
**PCT/JP2016/079998**

(87) International publication number:
**WO 2018/066133 (12.04.2018 Gazette 2018/15)**

(54) **VEHICLE ASSESSMENT METHOD, TRAVEL ROUTE CORRECTION METHOD, VEHICLE ASSESSMENT DEVICE, AND TRAVEL ROUTE CORRECTION DEVICE**

FAHRZEUGBEURTEILUNGSVERFAHREN, VERFAHREN ZUR KORREKTUR DER REISEROUTE, FAHRZEUGBEURTEILUNGSVORRICHTUNG UND VORRICHTUNG ZUR KORREKTUR DER REISEROUTE

PROCÉDÉ D'ÉVALUATION DE VÉHICULE, PROCÉDÉ DE CORRECTION D'ITINÉRAIRE DE DÉPLACEMENT, DISPOSITIF D'ÉVALUATION DE VÉHICULE ET DISPOSITIF DE CORRECTION D'ITINÉRAIRE DE DÉPLACEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2019 Bulletin 2019/33**

(73) Proprietor: **Nissan Motor Co., Ltd.**
**Yokohama-shi, Kanagawa 221-0023 (JP)**

(72) Inventors:
• **AOKI, Motonobu**
**Atsugi-shi**
**Kanagawa 243-0123 (JP)**

• **FUJITA, Susumu**
**Atsugi-shi**
**Kanagawa 243-0123 (JP)**

(74) Representative: **Grünecker Patent- und Rechtsanwälte**
**PartG mbB**
**Leopoldstraße 4**
**80802 München (DE)**

(56) References cited:
WO-A1-2013/018537    WO-A1-2016/051460
JP-A- 2001 048 036    JP-A- 2005 524 135
JP-A- 2007 326 447    US-A1- 2005 228 588

**Description**

The present invention relates to a vehicle determination method, a travel route correction method, a vehicle determination apparatus, and a travel route correction apparatus.

A method for assisting the lateral guidance of motor vehicles is heretofore known (Patent Document 1: Japanese Translation of PCT International Application, No. 2005-524135A). In this method, boundaries of a traveling lane and the actual position of a vehicle relative to the boundaries are detected using a sensor device and an output signal is calculated so that the deviation between a target value and an actual value of the lateral position of the vehicle is reduced. This method includes detecting another vehicle on an adjacent lane to the lane defined by the boundaries and varying the target value in accordance with measured positional data of the other vehicle.

[Patent Document 1] Japanese Translation of PCT International Application, No. 2005-524135A

WO 2016/051460 A1 relates to a travel control device detecting the presence of an avoidance object within a detection area, wherein the detection area is located next to a subject vehicle in a lateral direction. Further, it is determined whether or not the avoidance object is located in an adjacent lane and exists within the detection area, the adjacent lane being adjacent to a lane in which the subject vehicle travels.

However, the above prior art has a problem in that the presence or absence of another vehicle cannot be determined if the boundaries of the traveling lane cannot be detected by the sensor device.

A problem to be solved by the present invention is to provide a method and an apparatus with which the presence or absence of another vehicle can be determined even in a situation in which the lane detection is difficult.

The invention is defined by the independent claims. The dependent claims describe advantageous embodiments.

According to the present invention, an effect can be obtained that the presence or absence of another vehicle located laterally to the subject vehicle can be determined.

[Brief Description of Drawings]

FIG. 1 is a block diagram illustrating a driving assistance system according to one or more embodiments of the present invention.
FIG. 2 is a diagram for describing a vehicle determination region.
FIG. 3 is a diagram for describing vehicle determination regions.
FIG. 4 is a diagram for describing a travel route correction process.
FIG. 5 is a flowchart illustrating the control flow of a processor illustrated in FIG. 1.

Hereinafter, one or more embodiments of the present invention will be described with reference to the drawings.

«First Embodiment»

An embodiment of the present invention will be described below with reference to the drawings. In the present embodiment, an exemplary case will be described in which the vehicle determination apparatus or travel route correction apparatus according to the present invention is applied to a driving assistance system that cooperates with an onboard apparatus 200 equipped in a vehicle.

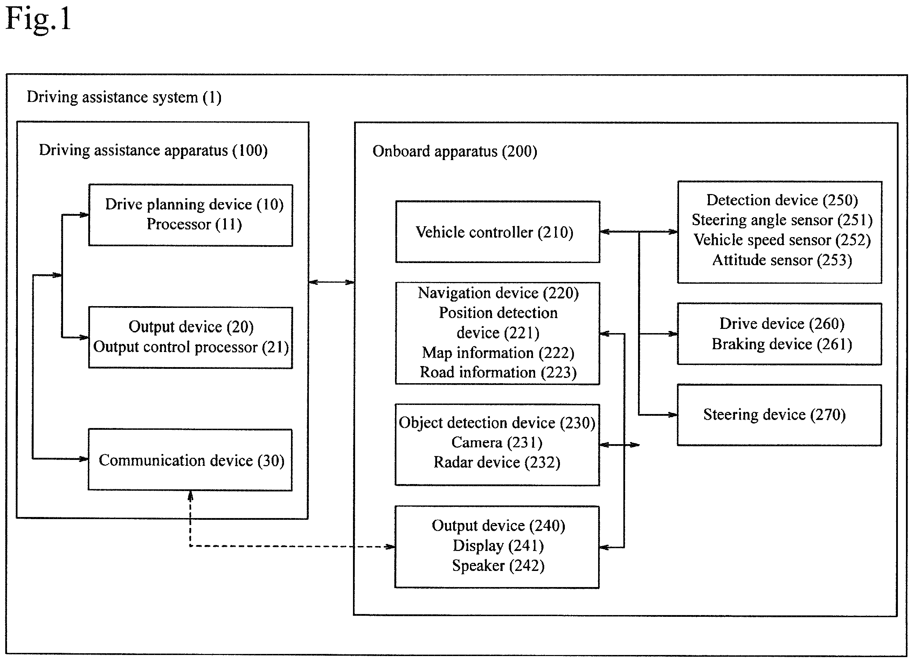

FIG. 1 is a diagram illustrating the block configuration of a driving assistance system 1. The driving assistance system 1 of the present embodiment comprises a driving assistance apparatus 100 and an onboard apparatus 200. The driving assistance apparatus 100 of the present invention is not limited in its form of being carried out and may be equipped in a vehicle or may also be applied to a portable terminal device that is capable of exchanging information with the onboard apparatus 200. Examples of such a terminal device include equipment, such as a smartphone or a PDA. The driving assistance system 1, the driving assistance apparatus 100, the onboard apparatus 200, and various devices comprised by them may each be a computer that includes an arithmetic processing unit, such as one or more CPUs, and executes arithmetic processing.

The onboard apparatus 200 will first be described.

The onboard apparatus 200 of the present embodiment comprises a vehicle controller 210, a navigation device 220, an object detection device 230, and an output device 240. These devices which constitute the onboard apparatus 200 are connected to one another via a controller area network (CAN) or other onboard LAN to mutually exchange information. The onboard apparatus 200 can exchange information with the driving assistance apparatus 100 via such an onboard LAN. The vehicle controller 210 operates a detection device 250, a drive device 260, and a steering device 270.

The vehicle controller 210 of the present embodiment is provided with the detection device 250. The detection device 250 has a steering angle sensor 251, a vehicle speed sensor 252, and an attitude sensor 253. The steering angle sensor 251 detects information on a steering amount, a steering speed, steering acceleration, and the like and outputs the detection results to the vehicle controller 210. The vehicle speed sensor 252 detects a speed and/or acceleration of the vehicle and outputs the detection results to the vehicle controller 210. The attitude sensor 253 detects a position of the vehicle, a pitch angle of the vehicle, a yaw angle of the vehicle, and a roll angle of the vehicle and outputs the detection results to the vehicle controller 210. The attitude sensor 253 includes a gyrosensor.

The vehicle controller 210 of the present embodiment, which is an onboard computer such as an engine control unit (ECU), electronically controls the driving of the vehicle. The vehicle may be, for example, an electric car having an electric motor as the travel driving source, an engine car having an internal-combustion engine as the travel driving source, or a hybrid car having both an electric motor and an internal-combustion engine as the travel driving sources. Examples of the electric car or hybrid car having an electric motor as the travel driving source include those of a type in which the power source for the electric motor is a secondary battery and a type in which the power source for the electric motor is a fuel cell.

The drive device 260 of the present embodiment includes a drive mechanism of a subject vehicle V1. The drive mechanism includes an electric motor and/or an internal-combustion engine as the above-described travel driving sources, a power transmission device including a drive shaft and an automatic transmission that transmit the output from the travel driving source or sources to the driving wheels, a braking device 261 that brakes wheels, and other necessary components. The drive device 260 executes the travel control, which includes acceleration and deceleration of the vehicle, through generating control signals for the drive mechanism on the basis of the input signals by an accelerator operation and a brake operation and the control signals acquired from the vehicle controller 210 or the driving assistance apparatus 100. The travel control including acceleration and deceleration of the vehicle can be performed in an automated or autonomous manner by transmitting the control information to the drive device 260. In the case of a hybrid car, a ratio of the torque output to the electric motor and the torque output to the internal-combustion engine in accordance with the traveling state of the vehicle is also transmitted to the drive device 260.

The steering device 270 of the present embodiment includes a steering actuator. The steering actuator includes a motor and other necessary components attached to the steering column shaft. The steering device 270 executes control of varying the traveling direction of the vehicle on the basis of the control signals acquired from the vehicle controller 210 or the input signals by a steering operation. The vehicle controller 210 transmits the control information, which includes the steering amount, to the steering device 270 thereby to execute the steering control of the subject vehicle so that the subject vehicle travels along the travel route. In addition or alternatively, the driving assistance apparatus 100 may execute the control of the traveling direction of the vehicle by controlling the braking amount for each wheel of the vehicle. In this case, the vehicle controller 210 transmits the control information, which includes the braking amount for each wheel, to the braking device 261 thereby to execute the control of the traveling direction of the vehicle. Control of the drive device 260 and/or control of the steering device 270 may be performed in a completely automated or autonomous manner or in a form of assisting with the driving operation (traveling operation) of the driver. Control of the drive device 260 and control of the steering device 270 can be suspended/canceled by an intervention operation of the driver. The vehicle controller 210 controls the driving of the subject vehicle in accordance with a driving plan made by a drive planning device 10.

The onboard apparatus 200 of the present embodiment includes the navigation device 220. The navigation device 220 calculates a route from the current position of the subject vehicle to a destination. The scheme of calculating the route may be a known scheme at the time of filing of the present application based on a graph search algorithm, such as Dijkstra's algorithm or A* search algorithm. The calculated route is transmitted to the vehicle controller 210 to be used for the driving assistance for the subject vehicle. The calculated route is also output as route guidance information via the output device 240, which will be described later.

The navigation device 220 includes a position detection device 221. The position detection device 221 is responsible to the Global Positioning System (GPS) and detects a traveling position (latitude/longitude) of the vehicle traveling.

The navigation device 220 includes accessible map information 222 and road information 223. It suffices that the map information 222 and the road information 223 can be read by the navigation device 220. The map information 222 and the road information 223 may be stored in a database configured to be physically separated from the navigation device 220 or may also be stored in a server from which the stored information is readable via a communication device 30 (or a communication device provided in the onboard apparatus 200).

The map information 222 is a so-called electronic map that represents information in which the latitude and longitude are associated with the map information. The map information 222 has the road information 223 which is associated with each point.

The road information 223 is defined by nodes and links connecting between the nodes. The road information 223 includes information for specifying a road by a position/region of the road, information on the road type and road width of each road, and information on the shape of a road. The road information 223 is stored such that identification information of each road link is associated with the position of an intersection, the entering direction into the intersection, the type of the intersection, and other information regarding the intersection. In addition or alternatively, the road information 223 may be stored such that the identification information of each road link is associated with the road type, the road width, the road shape, whether or not the straight-ahead traveling is permitted, the priority relationship in traveling, whether or not the overtaking is permitted (whether or not the lane change to an adjacent lane is permitted), and other information regarding the road.

The navigation device 220 specifies a travel route along which the subject vehicle travels, on the basis of the current position of the subject vehicle detected by the position detection device 221. The travel route is a planned travel route for the subject vehicle and/or a travel route along which the subject vehicle has actually traveled. The travel route may also be a route to a destination designated by the user or a route to a destination estimated on the basis of the travel history of the subject vehicle V1/user. The travel route along which the subject vehicle travels may be specified for each road, specified for each road on which the inbound/outbound direction is provided, or specified for each single lane in which the subject vehicle actually travels. The navigation device 220 refers to the road information 223, which will be described later, to specify the road link for each lane of the travel route along which the subject vehicle travels.

The travel route includes specifying information (coordinate information) for one or more points through which the subject vehicle V1 will travel in future. The travel route includes at least a point that suggests the next traveling position at which the subject vehicle travels. The travel route may be composed of a continuous line or may also be composed of discrete points. Although not particularly limited, the travel route is specified by a road identifier, a lane identifier, and/or a link identifier. These road identifier, lane identifier, and link identifier are defined in the map information 222 and/or the road information 223.

The onboard apparatus 200 includes the object detection device 230. The object detection device 230 detects the situation around the subject vehicle. The object detection device 230 of the subject vehicle detects the existence and existing positions of objects including obstacles that may exist around the subject vehicle. Although not particularly limited, the object detection device 230 includes a camera 231. The camera 231 is, for example, an imaging device comprising an imaging element such as a CCD. The camera 231 may be an infrared camera or a stereo camera. The camera 231 is disposed at a certain position of the subject vehicle and captures images of objects around the subject vehicle. The term "around the subject vehicle" as used herein encompasses the concepts of "ahead of the subject vehicle," "behind the subject vehicle," "laterally to the subject vehicle on the left side," and "laterally to the subject vehicle on the right side." Objects include two-dimensional signs such as stop lines painted on the road surface. Objects include three-dimensional objects. Objects include stationary objects such as traffic signs. Objects include moving objects such as pedestrians, two-wheel vehicles, and four-wheel vehicles (other vehicles). Obj ects include road structures such as guardrails, median strips, and curbstones.

The object detection device 230 may analyze the image data and identify the type of an object on the basis of the analysis result. The object detection device 230 uses a pattern matching technique or the like to identify whether or not the object included in the image data is a vehicle, a pedestrian, or a traffic sign. The object detection device 230 processes the obtained image data to acquire the distance from the subject vehicle to an object existing around the subject vehicle on the basis of the position of the object. In particular, the object detection device 230 acquires the positional relationship between the object and the subject vehicle.

The object detection device 230 may include a radar device 232. Examples of the radar device 232 include those, such as millimeter-wave radar, laser radar, ultrasonic radar, and laser range finder, which are of schemes known at the time of filing of the present application. The object detection device 230 detects presence or absence of objects, positions of the objects, and distances to the objects on the basis of the received signals from the radar device 232. The object detection device 230 may detect presence or absence of objects, positions of the objects, and distances to the objects on the basis of clustering results of point cloud information which is acquired using the laser radar.

The onboard apparatus 200 includes the output device 240. The output device 240 includes a display 241 and a speaker 242. The output device 240 outputs various information items regarding the driving assistance to the user or to occupants of surrounding vehicles. The output device 240 outputs information regarding a prepared driving action plan and travel control based on the driving action plan. The output device 240 preliminarily informs the subject vehicle's occupants that the steering operation and/or acceleration or deceleration will be executed, via the display 241 and/or the speaker 242, as information in accordance with the control information for the subject vehicle to travel on the travel route (target route). In addition or alternatively, the occupants of the subject vehicle or the occupants of other vehicles may be preliminarily informed of such information items regarding the driving assistance via exterior lamps and/or interior lamps. In addition or alternatively, the output device 240 may output various information items regarding the driving assistance to external devices of the Intelligent Transport Systems (ITS) and the like via a communication device. When the travel route has been corrected, the output device may output the information that the travel route is corrected and the information on the corrected travel route.

The driving assistance apparatus 100 will then be described.

The driving assistance apparatus 100 comprises a drive planning device 10, an output device 20, and a communication device 30. The output device 20 achieves the same functions as those of the previously-described output device 240 of the onboard apparatus 200. The display 241 and the speaker 242 are used as components of the output device 20. The drive planning device 10 and the output device 20 can exchange information with each other via a wired or wireless communication line. The communication device 30 performs information exchange with the onboard apparatus 200, information exchange within the driving assistance apparatus 100, and information exchange with the external of the driving assistance system 1.

The drive planning device 10 will first be described.

The drive planning device 10 includes a processor 11 that serves as a control device of the drive planning device 10. The processor 11 is a calculation device that performs an another vehicle determination process, a travel route correction process, and a driving assistance process. The another vehicle determination process includes determining the presence or absence of another vehicle located laterally to the subject vehicle. The travel route correction process includes correcting the travel route of the subject vehicle in accordance with the position of another vehicle located laterally to the subject vehicle. The driving assistance process includes performing the driving assistance so that the subject vehicle travels on the travel route. During the driving assistance, the travel route includes a travel route presented in the preparation of the driving plan or a travel route corrected in the correction process. Specifically, the processor 11 is a computer comprising a read only memory (ROM) that stores programs for executing the another vehicle determination process, the travel route correction process, and the driving assistance process, a central processing unit (CPU) as an operation circuit that executes the programs stored in the ROM to serve as the drive planning device 10, and a random access memory (RAM) that serves as an accessible storage device.

The processor 11 according to the present embodiment executes the following processes:

(1) a process of calculating a travel route along which the subject vehicle travels, detecting another vehicle located in the perpendicular direction to the tangential direction of the travel route, and determining the presence or absence of the other vehicle located laterally to the subject vehicle on the basis of the position of the detected other vehicle (another vehicle determination process);

(2) a process of correcting the travel route of the subject vehicle in accordance with a determination result determined by the another vehicle determination process (travel route correction process); and

(3) a process of acquiring (detecting/extracting) a plurality of events encountered when traveling along the travel route and controlling the subject vehicle in an automated or autonomous manner to travel along the travel route using the relationship between each extracted event and the subject vehicle (automated or autonomous driving process).

The processor 11 has a first block that realizes the another vehicle determination process, a second block that realizes the travel route correction process, and a third block that executes the automated or autonomous driving process. The processor 11 executes each of the above functions by cooperation of software for realizing each function or for executing each process and the above-described hardware.

The calculation process for the travel route will first be described.

The processor 11 calculates the travel route along which the subject vehicle is traveling or traveling is planned. To calculate the travel route, the processor 11 acquires the subject vehicle information. The processor 11 acquires the current position of the subject vehicle from the position detection device 221. The processor 11 refers to the map information 222 to calculate the travel route using the acquired current position and traveling direction. The processor 11 may acquire the planned travel route, which is obtained by the navigation device 220, as the travel route. The processor 11 may acquire the guidance route from the current position to the destination, which is obtained by the navigation device 220, as the travel route. For the calculation process for the route of the subject vehicle, a scheme known at the time of filing of the present application can be appropriately used.

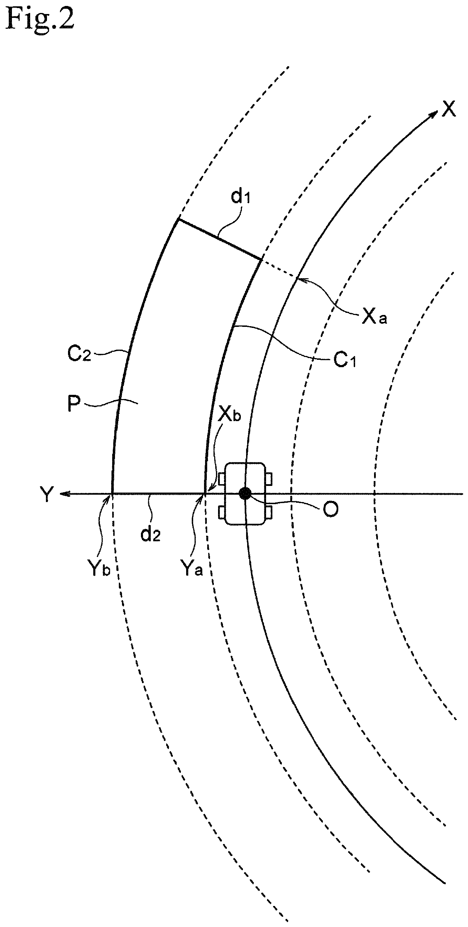

With reference to FIG. 2, the process of setting a vehicle determination region will be described. FIG. 2 is a diagram for describing the vehicle determination region. The description will be made with reference to an exemplary case as illustrated in FIG. 2 in which the subject vehicle travels along a road with three lanes each way having a certain curvature. Various control processes executed by the processor 11 can be applied not only to a road with three lanes each way having a certain curvature but also to other road environments such as a straight road with two lanes each way.

The processor 11 acquires the positional information of the subject vehicle from the navigation device 220 and acquires the external information of the subject vehicle from the object detection device 230. The processor 11 extracts information on other vehicles from the acquired external information. The processor 11 specifies the direction in which another vehicle is present, with respect to the current position of the subject vehicle. It suffices that the direction allows the right side and the left side to be distinguished with respect to the current position of the subject vehicle. The right side and the left side are in the perpendicular direction to the traveling direction of the subject vehicle. In addition, the processor 11 specifies the vehicle speed of another vehicle from the external information.

The processor 11 sets a vehicle determination region on a lane other than the traveling lane of the subject vehicle with reference to the travel route which is calculated by the calculation process for the travel route. The lane other than the traveling lane of the subject vehicle is, for example, a lane adjacent to the lane in which the subject vehicle is traveling at the moment (this lane will also be referred to as an "adjacent lane," hereinafter). The vehicle determination region is set in accordance with the position of the vehicle, the speed of the vehicle, etc.

The vehicle determination region is represented by a closed area along the road shape. For example, when the road shape is a curved shape as illustrated in FIG. 2, the vehicle determination region P is represented by a closed area that includes curved lines. When the road shape is a linear shape, the vehicle determination region is represented by a rectangular shape.

The processor 11 sets the travel route as a first axis and sets the lateral direction with respect to the subject vehicle as a second axis, provided that the current position of the subject vehicle is the point of origin (o) on the map data. The first axis and the second axis are the coordinate axes of the coordinate system which represents the vehicle determination region. As illustrated in FIG. 2, for example, it is assumed that the subject vehicle V is traveling in a curve-shaped lane. In this case, the first axis corresponds to the X axis illustrated in FIG. 2, and the second axis corresponds to the Y axis illustrated in FIG. 2. The X axis is represented by a trajectory of a curved line along the curve-shaped lane. The traveling direction of the subject vehicle is the positive direction of the X axis. The left side of the subject vehicle (the left side with respect to the traveling direction) is in the positive direction of the Y axis.

The vehicle determination region is surrounded by two curved lines parallel to the X axis and two straight lines parallel to the Y axis. When the vehicle determination region is expressed in the coordinate system, the straight line ($d_1$) on the side of the traveling direction of the subject vehicle (the positive direction of the X axis) out of the two straight lines is $X=X_a$ while the straight line ($d_2$) on the opposite side to the traveling direction of the subject vehicle (in the negative direction of the X axis) is $X=X_b$. The right-side curved line ($c_1$) out of the two curved lines is $Y=Y_a$ while the left-side curved line ($c_2$) is $Y=Y_b$. Values ($X_a$, $X_b$, $Y_a$, $Y_b$) representing the curved lines and straight lines correspond to threshold values for determining the position and size of the vehicle determination region.

The processor 11 calculates the threshold values ($X_a$, $X_b$, $Y_a$, $Y_b$) using the following method in accordance with the position of the subject vehicle, the direction of another vehicle, the vehicle speed of the subject vehicle, and the vehicle speed of the other vehicle.

The processor 11 compares the absolute speed ($V_e$) of the subject vehicle with the absolute speed ($V_a$) of the other vehicle. When the absolute speed ($V_e$) of the subject vehicle is less than the absolute speed ($V_a$) of the other vehicle, the processor 11 calculates the threshold values ($X_a$, $X_b$) using the following Equations (1) and (2).

[Equation 1]

$$X_a = 0 \qquad (1)$$

[Equation 2]

$$X_b = (V_e - V_a) \times T \qquad (2)$$

Here, T represents a margin time remaining for one vehicle to come close to the other vehicle and is preliminarily set. The time (T) is, for example, a Time To Collision (TTC).

On the other hand, when the absolute speed ($V_e$) of the subject vehicle is not less than the absolute speed ($V_a$) of the other vehicle, the processor 11 calculates the threshold values ($X_a$, $X_b$) using the following Equations (3) and (4).

[Equation 3]

$$X_a = (V_e - V_a) \times T \qquad (3)$$

[Equation 4]

$$X_b = 0 \qquad (4)$$

The processor 11 specifies the direction of the other vehicle with respect to the current position of the subject vehicle. The processor 11 also specifies the width of the lane on the basis of the external information of the subject vehicle or the map information 222. When the width of the lane cannot be specified, the processor 11 specifies the vehicle width (W) of the subject vehicle. The vehicle width (W) may be set to a larger width than the actual vehicle width of the subject vehicle. For example, the vehicle width (W) may be set to a comparable length to an average width of lanes.

When the other vehicle is present on the left side of the subject vehicle, the processor 11 calculates the threshold values ($Y_a$, $Y_b$) using the following Equations (5) and (6).

[Equation 5]

$$Y_a = \frac{W}{2} \qquad (5)$$

[Equation 6]

$$Y_b = \frac{3W}{2} \qquad (6)$$

When the other vehicle is present on the right side of the subject vehicle, the processor 11 calculates the threshold values ($Y_a$, $Y_b$) using the following Equations (7) and (8).

[Equation 7]

$$Y_a = -\frac{3W}{2} \qquad (7)$$

[Equation 8]

$$Y_b = -\frac{W}{2} \qquad (8)$$

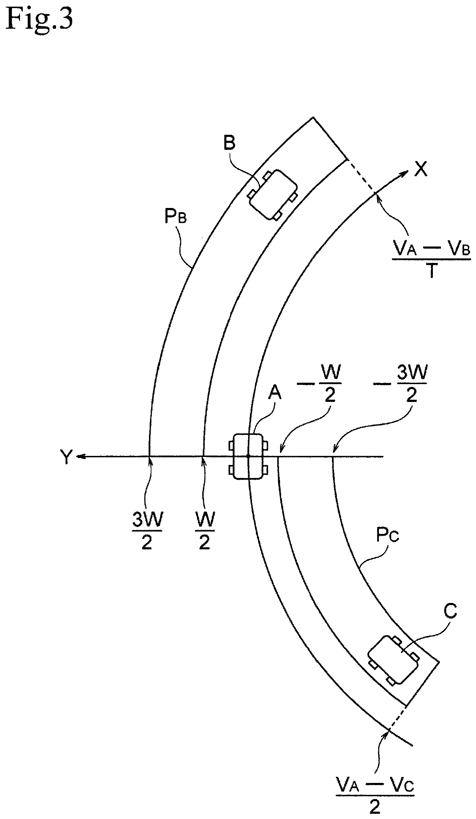

With reference to the example of FIG. 3, the vehicle determination region set by the processor 11 will then be described. As illustrated in FIG. 3, another vehicle B is traveling in the left-side adjacent lane to the traveling lane of the subject vehicle A, and still another vehicle C is traveling in the right-side adjacent lane. The vehicle speed $V_B$ of the other vehicle B is smaller than the vehicle speed $V_A$ of the subject vehicle A. The vehicle speed Vc of the other vehicle C is larger than the vehicle speed $V_A$ of the subject vehicle A.

The processor 11 acquires the current positional information of the subject vehicle A and sets the current position of the subject vehicle A to a reference point (corresponding to the point of origin of the coordinate system) for setting the vehicle determination region. The processor 11 specifies that the other vehicle B is traveling ahead of the subject vehicle A on the left side and that the other vehicle C is traveling behind the subject vehicle A on the right side.

The vehicle speed ($V_A$) of the subject vehicle A is larger than the vehicle speed ($V_B$) of the other vehicle B; therefore, the processor 11 calculates the threshold values ($X_a$, $X_b$) using the Equations (3) and (4). The threshold ($X_a$) is ($V_A$-$V_B$)×T. The threshold value ($X_a$=($V_A$-$V_B$)×T) is a positive value. The threshold value ($X_b$) is zero. In addition, the other vehicle B is located on the left side of the subject vehicle A; therefore, the processor 11 calculates the threshold values ($Y_a$, $Y_b$) using Equations (5) and (6). The threshold ($Y_a$) is W/2 and the threshold ($Y_b$) is 3W/2. Then, the vehicle determination region $P_B$ represented by the threshold values ($X_a$, $X_b$, $Y_a$, $Y_b$) is set on the left-side adjacent lane to the subject vehicle A, as illustrated in FIG. 3.

The processor 11 sets a vehicle determination region Pc also in the right-side adjacent lane because the other vehicle C is traveling in the right-side adjacent lane. The vehicle speed ($V_A$) of the subject vehicle A is smaller than the vehicle speed ($V_C$) of the other vehicle C; therefore, the processor 11 calculates the threshold values ($X_a$, $X_b$) using the Equations (1) and (2). The threshold value ($X_a$) is zero. The threshold ($X_b$) is ($V_A$-$V_C$)×T. The threshold value ($X_b$=($V_A$-$V_C$)×T) is a negative value. In addition, the other vehicle C is located on the right side of the subject vehicle A; therefore, the processor 11 calculates the threshold values ($Y_a$, $Y_b$) using Equations (7) and (8). The threshold ($Y_a$) is -(3W/2) and the threshold ($Y_b$) is -(W/2). Then, the vehicle determination region $P_C$ represented by the threshold values ($X_a$, $X_b$, $Y_a$, $Y_b$) is set on the right-side adjacent lane to the subject vehicle A, as illustrated in FIG. 3.

As described above, the processor 11 sets the vehicle determination regions on the adjacent lanes laterally to the position of the subject vehicle. When the subject vehicle A comes relatively close to another vehicle traveling ahead in the adjacent lane, the processor 11 sets the vehicle determination region on the adjacent lane ahead. When another vehicle traveling behind in the adjacent lane comes relatively close to the subject vehicle, the processor 11 sets the vehicle determination region on the adjacent lane behind.

The process of determining the presence or absence of another vehicle will then be described. After setting the vehicle determination region, the processor 11 specifies the current position of the other vehicle on the basis of the output result of the object detection device 230. Then, the processor 11 determines whether or not the current position of the other vehicle falls within the vehicle determination region. Specifically, the processor 11 calculates coordinates representing the current position of the other vehicle. When the position coordinates (X, Y) of the other vehicle satisfy the following Equations (9) and (10), the processor 11 determines that the other vehicle is present laterally to the subject vehicle. On the other hand, when the position coordinates (X, Y) of the other vehicle do not satisfy the following Equations (9) and (10), the processor 11 determines that the other vehicle is not present laterally to the subject vehicle.

[Equation 9]

$$X_b \leqq X \leqq X_a \qquad\qquad (9)$$

[Equation 10]

$$Y_a \leqq Y \leqq Y_b \qquad\qquad (10)$$

The travel route correction process will be described.

The processor 11 corrects the travel route in accordance with the determination result of the vehicle determination process. When another vehicle comes relatively close to the subject vehicle, the processor 11 corrects the travel route of the subject vehicle so that the subject vehicle travels laterally away from the other vehicle.

Specifically, the processor 11 calculates the position and vehicle speed of another vehicle present within a vehicle determination region from the external information acquired from the object detection device 230. The processor 11 calculates each of the position of another vehicle located on the left side with respect to the traveling direction of the subject vehicle and the position of still another vehicle located on the right side with respect to the traveling direction of the subject vehicle.

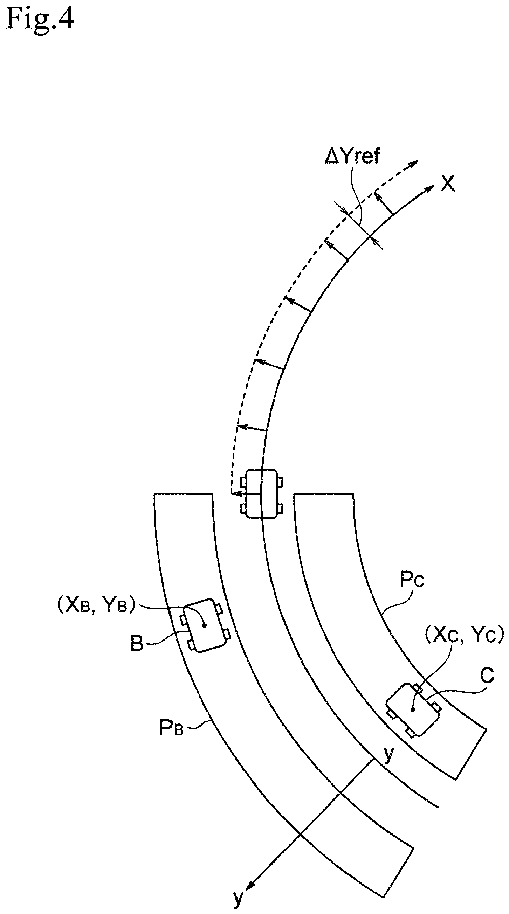

FIG. 4 is a diagram for describing the travel route correction process and is a conceptual diagram for describing the travel route of the subject vehicle A and the positional relationships among vehicles A to C. Vehicle A is the subject vehicle, and vehicles B and C are other vehicles. Notation of coordinate axes (X axis and Y axis) is the same as that in FIGS. 2 and 3. The position of the other vehicle B is represented by coordinates ($X_B$, $Y_B$), and the position of the other vehicle C is represented by coordinates ($X_C$, $Y_C$). $P_B$ represents the vehicle determination region used for determination of the other vehicle B, and $P_C$ represents the vehicle determination region used for determination of the other vehicle C. The dotted arrow indicates the corrected travel route.

The processor 11 calculates a correction amount ($\Delta Y_{ref}$) for the travel route using the following Equation (11).

[Equation 11]

$$\Delta Y_{ref} = K_V V_B + K_Y Y_B + K_V V_C + K_Y Y_C \qquad\qquad (11)$$

Here, $K_V$ and $K_Y$ are correction coefficients, which are preliminarily set. For example, when the other vehicle B or C is coming close to the subject vehicle A from behind, the correction coefficient ($K_V$) is set such that the correction amount ($K_V V_B$ or $K_V V_C$) increases as the vehicle speed of the other vehicle increases. For example, when the subject vehicle A is coming close to the other vehicle B or C present ahead, the correction coefficient ($K_V$) is set such that the correction amount ($K_V V_B$ or $K_V V_C$) increases as the vehicle speed of the other vehicle decreases. In addition or alternatively, the correction coefficient ($K_Y$) is set such that the correction amount ($K_Y Y_B$ or $K_Y Y_C$) increases as the lateral distance between the subject vehicle A and the other vehicle B or C is narrower, that is, as the coordinate in the Y direction of the other vehicle B or C is smaller.

The correction amount ($\Delta Y_{ref}$) is a shift amount when the current travel route of the subject vehicle is shifted in the Y-axis direction. That is, when the correction amount ($\Delta Y_{ref}$) is a positive value, the travel route of the subject vehicle is shifted to the left side with respect to the traveling direction. On the other hand, when the correction amount ($\Delta Y_{ref}$) is a negative value, the travel route of the subject vehicle is shifted to the right side with respect to the traveling direction. As the correction amount ($\Delta Y_{ref}$) increases, the shift amount of the travel route increases.

The processor 11 may calculate the correction amount ($\Delta Y_{ref}$) for the travel route using the following Equation (12) instead of the above Equation (11).

[Equation 12]

$$\Delta Y_{ref} = K_V(V_B - V_A) + K_Y Y_B + K_V(V_C - V_A) + K_Y Y_C \qquad (1\,2)$$

Here, the correction coefficient ($K_V$) is set such that the correction amount ($K_V(V_B-V_A)$ or $K_V(V_C-V_A)$) increases as the relative speed ($V_B-V_A$ or $V_C-V_A$) between the subject vehicle and the other vehicle increases.

When respective other vehicles are present in the left-side adjacent lane and the right-side adjacent lane, the processor 11 calculates a correction amount upper limit ($\Delta Y_{ref\,MAX}$). Specifically, the processor 11 calculates a left-side inter-vehicle distance and a right-side inter-vehicle distance. The left-side inter-vehicle distance is a distance in the vehicle width direction between the subject vehicle and the other vehicle present in the left-side adjacent lane. The right-side inter-vehicle distance is a distance in the vehicle width direction between the subject vehicle and the other vehicle present in the right-side adjacent lane. In the example of FIG. 4, $Y_B$ represents the left-side inter-vehicle distance and $Y_C$ represents the right-side inter-vehicle distance. The processor 11 sets a smaller distance of the left-side inter-vehicle distance and the right-side inter-vehicle distance as the correction amount upper limit ($\Delta Y_{ref\,MAX}$). When the correction amount ($\Delta Y_{ref}$) is not less than the correction amount upper limit ($\Delta Y_{ref\,MAX}$), the processor 11 corrects the correction amount ($\Delta Y_{ref}$) to a smaller value than the correction amount upper limit ($\Delta Y_{ref\,MAX}$).

When another vehicle is present only in the left-side adjacent lane, the processor 11 may calculate the correction amount ($\Delta Y_{ref}$) using the following Equation (13).

[Equation 13]

$$\Delta Y_{ref} = K_V V_C + K_Y Y_C \qquad (1\,3)$$

When another vehicle is present only in the right-side adjacent lane, the processor 11 may calculate the correction amount ($\Delta Y_{ref}$) using the following Equation (14).

[Equation 14]

$$\Delta Y_{ref} = K_V V_C + K_Y Y_C \qquad (1\,4)$$

That is, when determining that another vehicle is present on the left side with respect to the traveling direction of the subject vehicle, the processor 11 calculates the correction amount such that the travel route shifts to a route on the right side with respect to the traveling direction, and corrects the travel route. On the other hand, when determining that another vehicle is present on the right side with respect to the traveling direction of the subject vehicle, the processor 11 calculates the correction amount such that the travel route shifts to a route on the left side with respect to the traveling direction, and corrects the travel route.

After calculating the correction amount ($\Delta Y_{ref}$), the processor 11 corrects the travel route of the subject vehicle using the calculated correction amount ($\Delta Y_{ref}$). Addition of the correction amount ($\Delta Y_{ref}$) to the Y coordinate of the travel route allows the travel route to be corrected because the travel route is represented by the coordinate system using the X axis and the Y axis. Thus, the processor 11 corrects the travel route by shifting the travel route before correction in the perpendicular direction to the traveling direction of the subject vehicle. In this operation, if the correction amount ($\Delta Y_{ref}$) is merely added to the travel route before correction, the corrected travel route may be bent at the correction point at which the correction is performed. To prevent the occurrence of such a bending point on the corrected travel route, the processor 11 adds a correction amount through multiple stages so that the travel route before correction gradually approaches the travel route (corrected traveling route) to which the correction amount ($\Delta Y_{ref}$) is added. The correction amount to be added at each stage is, for example, a value obtained by dividing the correction amount ($\Delta Y_{ref}$)

by a predetermined correction time. The correction time is a period during which the correction is executed. For example, the correction time increases as the speed of the subject vehicle increases. That is, the processor 11 corrects the travel route so that the correction amount increases with time.

The automated or autonomous driving process will be described.

The processor 11 controls the drive device 260 and the steering device 270 so that the subject vehicle travels along the travel route. In this operation, when the travel route of the subject vehicle is corrected by the travel route correction process, the processor 11 controls the drive device 260 and the steering device 270 on the basis of the corrected travel route. Although a specific control method in the automated or autonomous driving process is not described in detail, a control method known at the time of filing of the present application, for example, can be used.

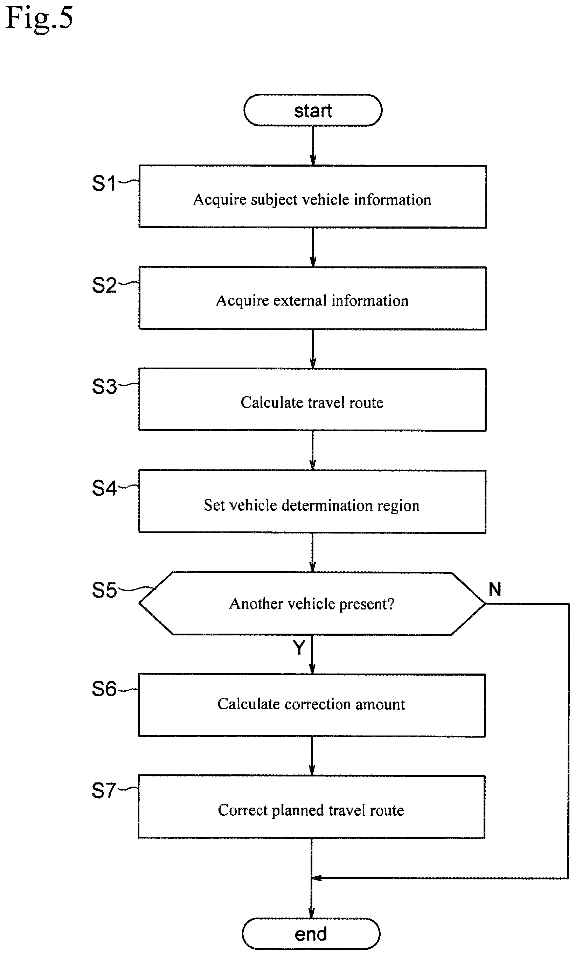

With reference to FIG. 5, the control flow of the processor 11 will then be described. The control process executed by the processor 11 includes the another vehicle determination process and the travel route correction process, which will be described. The processor 11 repeatedly executes the control flow illustrated in FIG. 5 at predetermined intervals.

In step S1, the processor 11 acquires the subject vehicle information from the navigation device 220 and the detection device 250. The subject vehicle information, which is information on the subject vehicle, includes at least the positional information and vehicle speed information of the subject vehicle.

In step S2, the processor 11 acquires the external information from the object detection device 230. The external information includes at least information on other vehicles. In step S3, the processor 11 calculates the travel route of the subject vehicle.

In step S4, the processor 11 sets one or more vehicle determination regions. Specifically, the processor 11 uses the object detection device 230 to detect another vehicle located in the perpendicular direction to the tangential direction of the travel route of the subject vehicle. The processor 11 sets the vehicle determination region laterally to the position of the subject vehicle.

In step S5, the processor 11 determines the presence or absence of another vehicle located laterally to the subject vehicle, on the basis of the detected position of the other vehicle. When the position of the detected other vehicle falls within the vehicle determination region, the processor 11 determines that the other vehicle is present laterally to the subject vehicle. The control flow proceeds to step S6. On the other hand, when the position of the detected other vehicle does not fall within the vehicle determination region, the processor 11 determines that the other vehicle is not present laterally to the subject vehicle. The control flow thus concludes.

In step S6, the processor 11 calculates the correction amount in accordance with the position of the detected other vehicle, the speed of the detected other vehicle, the position of the subject vehicle, and the vehicle speed of the subject vehicle.

In step S7, the processor 11 corrects the travel route in accordance with the calculated correction amount. The control flow thus concludes.

As described above, according to the present invention, the travel route of the subject vehicle is calculated, another vehicle located in the perpendicular direction to the tangential direction of the travel route is detected, and the presence or absence of another vehicle located laterally to the subject vehicle is determined on the basis of the position of the detected other vehicle. Through this operation, the presence or absence of another vehicle can be determined even in a situation in which the lane detection is difficult.

According to the present invention, the vehicle determination region is set laterally to the position of the subject vehicle, and when the position of the detected other vehicle falls within the vehicle determination region, a determination is made that the other vehicle is present laterally to the subject vehicle. Through this operation, the presence or absence of another vehicle present laterally to the subject vehicle can be determined even in a situation in which the lane detection is difficult.

According to one or more embodiments of the present invention, the vehicle determination region is set on at least one of the left side and the right side with respect to the traveling direction of the subject vehicle. Through this operation, the presence or absence of another vehicle present laterally to the subject vehicle on the left side and/or the presence or absence of another vehicle present laterally to the subject vehicle on the right side can be determined even in a situation in which the lane detection is difficult.

According to one or more embodiments of the present invention, the size of the vehicle determination region is set in accordance with the speed of the subject vehicle and the speed of the other vehicle. Through this operation, the presence or absence of a close vehicle can be determined with consideration for the possibility of collision.

According to one or more embodiments of the present invention, the size of the vehicle determination region in the perpendicular direction is set in accordance with the width of a lane or the width of a vehicle. The perpendicular direction refers to a direction perpendicular to the traveling direction. This allows the vehicle determination region to be set along with the actual traffic environment. Consequently, the accuracy in determination of the presence or absence of another vehicle can be enhanced.

According to one or more embodiments of the present invention, the travel route is corrected in accordance with the determination result made by the vehicle determination process. This allows a safe and secure travel route to be generated even in a situation in which the lane detection is difficult.

According to one or more embodiments of the present invention, when another vehicle comes relatively close to the subject vehicle, the travel route is corrected so that the subject vehicle travels laterally away from the other vehicle. Through this operation, even in a situation in which the lane detection is difficult, a safe and secure travel route can be generated when the other vehicle comes close to the subject vehicle.

According to one or more embodiments of the present invention, when a determination is made that another vehicle is present on the left side with respect to the traveling direction of the subject vehicle, the travel route is corrected so that the travel route shifts to a route on the right side with respect to the traveling direction. This allows a safe and secure travel route to be generated when the other vehicle comes close to the subject vehicle from the left side.

According to one or more embodiments of the present invention, when a determination is made that another vehicle is present on the right side with respect to the traveling direction of the subject vehicle, the travel route is corrected so that the travel route shifts to a route on the left side with respect to the traveling direction. This allows a safe and secure travel route to be generated when the other vehicle comes close to the subject vehicle from the right side.

According to one or more embodiments of the present invention, when a determination is made that another vehicle is present on the left side with respect to the traveling direction of the subject vehicle and still another vehicle is present on the right side with respect to the traveling direction of the subject vehicle, a shorter distance of the left-side inter-vehicle distance and the right-side inter-vehicle distance is set as a correction amount upper limit, a correction amount smaller than the correction amount upper limit is calculated in accordance with the determination result made by the vehicle determination process, and the travel route is corrected using the calculated correction amount. This can prevent the corrected travel route from interfering with the travel route of another vehicle or from coming close to the travel route of another vehicle, and a safe and secure travel route can therefore be generated.

According to one or more embodiments of the present invention, the correction amount is calculated in accordance with at least one value of the position and speed of another vehicle detected, and the travel route is corrected using the calculated correction amount. Through this operation, the presence or absence of a close vehicle can be determined with consideration for the possibility of collision.

According to one or more embodiments of the present invention, the travel route is corrected by adding the correction amount to the travel route before correction of the subject vehicle, and the correction amount is increased with time. This can prevent the travel route from rapidly varying when corrected.

According to one or more embodiments of the present invention, the travel route is corrected by shifting the travel route in the perpendicular direction to the traveling direction of the subject vehicle. For example, when the travel route is corrected during travel of the subject vehicle in a lane having a certain curvature, the corrected travel route is shifted parallel in the radial direction. Through this operation, even if variation occurs in the value of the position of a close vehicle, such as due to recognition errors of the vehicle during gyration, it is possible to suppress disturbance of the corrected travel route.

In a modified example of one or more embodiments of the present invention, when the position of another vehicle becomes a state of falling outside the vehicle determination region during correction of the travel route, the processor 11 reduces the correction amount with time. Another vehicle as referred to herein is a vehicle to be determined by the vehicle determination process. In an embodiment according to the modified example, the travel route is corrected so as to come away from another vehicle which comes close to the subject vehicle. Then, when the other vehicle which has come close disappears from around the subject vehicle, correction is no longer necessary and the processor 11 therefore returns the corrected travel route to the travel route before correction. In this operation, the processor 11 gradually reduces the correction amount with time. This correction amount corresponds to the difference between the travel route which has been corrected and the travel route before correction. This can prevent the travel route from rapidly varying when corrected.

In one or more embodiments of the present invention, the vehicle determination process and the travel route correction process can be executed by the processor 11 not only for an adjacent lane but also for a further adjacent lane to the adjacent lane.

[Description of Reference Numerals]

| 10 | Drive planning device |
| 11 | Processor |
| 20 | Output device |
| 30 | Communication device |
| 50 | Object detection device |

| 70 | Vehicle controller |
|---|---|
| 100 | Driving assistance apparatus |
| 120 | Navigation device |
| 200 | Onboard apparatus |
| 210 | Vehicle controller |
| 220 | Navigation device |
| 221 | Position detection device |
| 222 | Map information |
| 223 | Road information |
| 23 230 | Object detection device |
| 231 | Camera |
| 232 | Radar device |
| 240 | Output device |
| 241 | Display |
| 242 | Speaker |
| 250 | Detection device |
| 250 | Output device |
| 251 | Steering angle sensor |
| 252 | Vehicle speed sensor |
| 253 | Attitude sensor |
| 260 | Drive device |
| 261 | Braking device |
| 270 | Steering device |

**Claims**

1. A vehicle determination method for determining presence or absence of another vehicle (B, C) using a processor (11) configured to execute an another vehicle determination process, the vehicle determination method comprising:

   calculating, during travel of the subject vehicle (A) in a curve-shaped lane, a travel route of the subject vehicle (A) represented by a trajectory of a curved line along the curve-shaped lane;
   detecting the other vehicle (B, C) located in a perpendicular direction to a tangential direction of the travel route;
   setting a vehicle determination region (P), wherein
   the vehicle determination region (P) is set laterally to a position of the subject vehicle (A);
   when a position of the detected other vehicle (B, C) falls within the vehicle determination region (P), it is determined that the other vehicle (B, C) is present laterally to the subject vehicle (A);
   the vehicle determination region (P) is represented by a closed area; and
   **characterized in that**
   the vehicle determination region (P) is surrounded by at least two curved lines parallel to the travel route.

2. The vehicle determination method according to claim 1, comprising:
   setting the vehicle determination region (P) on each of a left side and a right side with respect to a traveling direction of the subject vehicle (A).

3. The vehicle determination method according to claim 1 or 2, comprising:
   setting a size of the vehicle determination region (P) in accordance with a speed of the subject vehicle (A) and a speed of the other vehicle (B, C).

4. The vehicle determination method according to any one of claims 1 to 3, comprising:
   setting a size of the vehicle determination region (P) in the perpendicular direction in accordance with a width of a lane or a width of a vehicle.

5. A travel route correction method comprising:
   correcting the travel route in accordance with a determination result determined by the vehicle determination method according to any one of claims 1 to 4.

6. The travel route correction method according to claim 5, comprising:

when the other vehicle (B, C) comes close to the subject vehicle (A), correcting the travel route so that the subject vehicle (A) travels laterally away from the other vehicle (B, C).

7. The travel route correction method according to claim 5 or 6, comprising:
when determining that the other vehicle (B) is present on a left side with respect to a traveling direction of the subject vehicle (A), correcting the travel route so that the travel route shifts to a route on a right side with respect to the traveling direction.

8. The travel route correction method according to any one of claims 5 to 7, comprising:
when determining that the other vehicle (C) is present on a right side with respect to a traveling direction of the subject vehicle (A), correcting the travel route so that the travel route shifts to a route on a left side with respect to the traveling direction.

9. The travel route correction method according to any one of claims 5 to 8, comprising:

when determining that the other vehicle (B) is present on a left side with respect to a traveling direction of the subject vehicle (A) and still another vehicle (C) is present on a right side with respect to the traveling direction of the subject vehicle (A), setting a shorter distance of a left-side inter-vehicle distance and a right-side inter-vehicle distance as a correction amount upper limit;
calculating a correction amount smaller than the correction amount upper limit in accordance with the determination result; and
correcting the travel route using the calculated correction amount.

10. The travel route correction method according to any one of claims 5 to 8, comprising:

calculating a correction amount in accordance with at least one value of a position and a speed of the detected other vehicle (B, C); and
correcting the travel route using the calculated correction amount.

11. The travel route correction method according to any one of claims 5 to 8, comprising:

calculating a correction amount for correcting the travel route;
correcting the travel route by adding the correction amount to the travel route before correction; and
increasing the correction amount with time.

12. The travel route correction method according to any one of claims 5 to 8, comprising:

when the position of the detected other vehicle (B, C) falls within the vehicle determination region (P), determining that the other vehicle (B, C) is present laterally to the subject vehicle (A);
calculating a correction amount for correcting the travel route;
correcting the travel route by adding the correction amount to the travel route before correction; and
when the position of the other vehicle (B, C) to be determined becomes a state of falling outside the vehicle determination region (P) during correction of the travel route, reducing the correction amount with time.

13. The travel route correction method according to any one of claims 5 to 12, comprising:
correcting the travel route by shifting the travel route before correction in the perpendicular direction.

14. A vehicle determination apparatus comprising:

a sensor (230) acquiring external information of a subject vehicle (A); and
a processor (11) executing an another vehicle determination process,
the sensor (230) being configured to detect another vehicle (B, C) located in a perpendicular direction to a tangential direction of a travel route of the subject vehicle (A),
the processor (11) being configured to:

calculate, during travel of the subject vehicle (A) in a curve-shaped lane, the travel route represented by a trajectory of a curved line along the curve-shaped lane;
set a vehicle determination region (P), wherein

the vehicle determination region is set laterally to a position of the subject vehicle (A);

when a position of the other vehicle (B, C) detected by the sensor (230) falls within the vehicle determination region (P), it is determined that the other vehicle (B, C) is present laterally to the subject vehicle (A);

the vehicle determination region (P) is represented by a closed area; and

**characterized in that**

the vehicle determination region (P) is surrounded by at least two curved lines parallel to the travel route.

15. A travel route correction apparatus comprising the vehicle determination apparatus according to claim 14, the processer (11) being further configured to correct the travel route in accordance with a determination result when determining that the other vehicle (B, C) is present laterally to the subject vehicle (A).


**Patentansprüche**

1. Fahrzeugbestimmungsverfahren zum Bestimmen des Vorhandenseins oder der Abwesenheit eines anderen Fahrzeugs (B, C) unter Verwendung eines Prozessors (11), der eingerichtet ist, einen Anderes-Fahrzeug-Bestimmungsvorgang auszuführen, wobei das Fahrzeugbestimmungsverfahren umfasst:

Berechnen, während Fahrens des Subjektfahrzeugs (A) in einer kurvenförmigen Spur, einer Fahrroute des Subjektfahrzeugs (A), die durch eine Trajektorie einer gekrümmten Linie entlang der kurvenförmigen Spur dargestellt wird;

Erkennen des anderen Fahrzeugs (B, C), das in einer senkrechten Richtung zu einer tangentialen Richtung der Fahrroute gelegen ist;

Einstellen eines Fahrzeug-Bestimmungsbereichs (P), wobei

der Fahrzeug-Bestimmungsbereich (P) lateral zu einer Position des Subjektfahrzeugs (A) eingestellt wird;

wenn eine Position des erkannten anderen Fahrzeugs (B, C) in dem Fahrzeug-Bestimmungsbereich (P) liegt, bestimmt wird, dass das andere Fahrzeug (B, C) lateral zu dem Subjektfahrzeug (A) vorhanden ist;

der Fahrzeug-Bestimmungsbereich (P) durch ein geschlossenes Gebiet dargestellt wird; und

**dadurch gekennzeichnet, dass**

der Fahrzeug-Bestimmungsbereich (P) umgeben ist von mindestens zwei gekrümmten Linien parallel zu der Fahrroute.

2. Fahrzeugbestimmungsverfahren nach Anspruch 1, umfassend:
Einstellen des Fahrzeug-Bestimmungsbereichs (P) auf jeder einer linken Seite und einer rechten Seite, in Bezug auf eine Fahrtrichtung des Subjektfahrzeugs (A).

3. Fahrzeugbestimmungsverfahren nach Anspruch 1 oder 2, umfassend:
Einstellen einer Größe des Fahrzeug-Bestimmungsbereichs (P) entsprechend einer Geschwindigkeit des Subjektfahrzeugs (A) und einer Geschwindigkeit des anderen Fahrzeugs (B, C).

4. Fahrzeugbestimmungsverfahren nach einem der Ansprüche 1 bis 3, umfassend:
Einstellen einer Größe des Fahrzeug-Bestimmungsbereichs (P) in der senkrechten Richtung entsprechend einer Breite einer Spur oder einer Breite eines Fahrzeugs.

5. Fahrroutenkorrekturverfahren, umfassend:
Korrigieren der Fahrroute entsprechend einem Bestimmungsergebnis, das durch das Fahrzeugbestimmungsverfahren nach einem der Ansprüche 1 bis 4 bestimmt wurde.

6. Fahrroutenkorrekturverfahren nach Anspruch 5, umfassend:
wenn das andere Fahrzeug (B, C) nahe an das Subjektfahrzeug (A) kommt, Korrigieren der Fahrroute, so dass das Subjektfahrzeug (A) lateral von dem anderen Fahrzeug (B, C) weg fährt.

7. Fahrroutenkorrekturverfahren nach Anspruch 5 oder 6, umfassend:
wenn bestimmt wird, dass das andere Fahrzeug (B) auf einer linken Seite in Bezug auf eine Fahrtrichtung des Subjektfahrzeugs (A) vorhanden ist, Korrigieren der Fahrroute, so dass die Fahrroute sich zu einer Route auf einer rechten Seite in Bezug auf die Fahrtrichtung verschiebt.

8. Fahrroutenkorrekturverfahren nach einem der Ansprüche 5 bis 7, umfassend:

wenn bestimmt wird, dass das andere Fahrzeug (C) auf einer rechten Seite in Bezug auf eine Fahrtrichtung des Subjektfahrzeugs (A) vorhanden ist, Korrigieren der Fahrroute, so dass die Fahrroute sich zu einer Route auf einer linken Seite in Bezug auf die Fahrtrichtung verschiebt.

9. Fahrroutenkorrekturverfahren nach einem der Ansprüche 5 bis 8, umfassend:

wenn bestimmt wird, dass das andere Fahrzeug (B) auf einer linken Seite in Bezug auf eine Fahrtrichtung des Subjektfahrzeugs (A) vorhanden ist und noch ein anderes Fahrzeug (C) auf einer rechten Seite in Bezug auf die Fahrtrichtung des Subjektfahrzeugs (A) vorhanden ist, Einstellen eines kürzeren Abstands eines linksseitigen Zwischenfahrzeugabstands und eines rechtsseitigen Zwischenfahrzeugabstands als eine Korrekturbetrag-Obergrenze;
Berechnen eines Korrekturbetrags, der geringer ist als die Korrekturbetrag-Obergrenze entsprechend dem Bestimmungsergebnis; und
Korrigieren der Fahrroute unter Verwendung des berechneten Korrekturbetrags.

10. Fahrroutenkorrekturverfahren nach einem der Ansprüche 5 bis 8, umfassend:

Berechnen eines Korrekturbetrags entsprechend mindestens einem Wert einer Position und einer Geschwindigkeit des erkannten anderen Fahrzeugs (B, C); und
Korrigieren der Fahrroute unter Verwendung des berechneten Korrekturbetrags.

11. Fahrroutenkorrekturverfahren nach einem der Ansprüche 5 bis 8, umfassend:

Berechnen eines Korrekturbetrags zum Korrigieren der Fahrroute;
Korrigieren der Fahrroute, indem der Korrekturbetrag zu der Fahrroute vor der Korrektur addiert wird; und
Vergrößern des Korrekturbetrags mit der Zeit.

12. Fahrroutenkorrekturverfahren nach einem der Ansprüche 5 bis 8, umfassend:

wenn die Position des erkannten anderen Fahrzeugs (B, C) in dem Fahrzeug-Bestimmungsbereich (P) liegt, Bestimmen, dass das andere Fahrzeug (B, C) lateral zu dem Subjektfahrzeug (A) vorhanden ist;
Berechnen eines Korrekturbetrags zum Korrigieren der Fahrroute;
Korrigieren der Fahrroute, indem der Korrekturbetrag zu der Fahrroute vor der Korrektur addiert wird; und
wenn die Position des zu bestimmenden anderen Fahrzeugs (B, C) während der Korrektur der Fahrroute zu einem Zustand wird, in dem sie außerhalb des Fahrzeug-Bestimmungsbereichs (P) liegt, Verringern des Korrekturbetrags mit der Zeit.

13. Fahrroutenkorrekturverfahren nach einem der Ansprüche 5 bis 12, umfassend:
Korrigieren der Fahrroute, indem die Fahrroute vor der Korrektur in die senkrechte Richtung verschoben wird.

14. Fahrzeugbestimmungsvorrichtung, umfassend:

ein Sensor (230), der externe Information eines Subjektfahrzeugs (A) erfasst; und
ein Prozessor (11), der einen Anderes-Fahrzeug-Bestimmungsvorgang ausführt,
wobei der Sensor (230) eingerichtet ist, ein anderes Fahrzeug (B, C) zu erkennen, das in einer senkrechten Richtung zu einer tangentialen Richtung einer Fahrroute des Subjektfahrzeugs (A) gelegen ist,
wobei der Prozessor (11) eingerichtet ist zum:

Berechnen, während Fahrens des Subjektfahrzeugs (A) in einer kurvenförmigen Spur, der Fahrroute, die durch eine Trajektorie einer gekrümmten Linie entlang der kurvenförmigen Spur dargestellt wird;
Einstellen eines Fahrzeug-Bestimmungsbereichs (P), wobei
der Fahrzeug-Bestimmungsbereich lateral zu einer Position des Subjektfahrzeugs (A) eingestellt wird;
wenn eine Position des anderen Fahrzeugs (B, C), das von dem Sensor (230) erkannt wird, in dem Fahrzeug-Bestimmungsbereich (P) liegt, bestimmt wird, dass das andere Fahrzeug (B, C) lateral zu dem Subjektfahrzeug (A) vorhanden ist;
der Fahrzeug-Bestimmungsbereich (P) durch ein geschlossenes Gebiet dargestellt wird; und
**dadurch gekennzeichnet, dass**
der Fahrzeug-Bestimmungsbereich (P) umgeben ist von mindestens zwei gekrümmten Linien parallel zu der Fahrroute.

15. Fahrroutenkorrekturvorrichtung, die die Fahrzeugbestimmungsvorrichtung nach Anspruch 14 umfasst, wobei der Prozessor (11) ferner eingerichtet ist, die Fahrroute entsprechend einem Bestimmungsergebnis zu korrigieren, wenn bestimmt wird, dass das andere Fahrzeug (B, C) lateral zu dem Subjektfahrzeug (A) vorhanden ist.

**Revendications**

1. Procédé de détermination de véhicule pour déterminer une présence ou une absence d'un autre véhicule (B, C) au moyen d'un processeur (11) configuré pour exécuter un autre processus de détermination de véhicule, le procédé de détermination de véhicule comprenant :

   calcul, au cours d'un déplacement du véhicule objet (A) dans une file de forme courbe, d'un trajet de déplacement du véhicule objet (A) représenté par une trajectoire d'une ligne courbe le long de la file de forme courbe ; détection de l'autre véhicule (B, C) positionné dans une direction perpendiculaire à une direction tangentielle du trajet de déplacement ; définition d'une zone de détermination de véhicule (P), dans lequel la zone de détermination de véhicule (P) est définie latéralement à une position du véhicule objet (A) ; lorsqu'une position de l'autre véhicule détecté (B, C) s'inscrit dans la zone de détermination de véhicule (P), il est déterminé que l'autre véhicule (B, C) est présent latéralement au véhicule objet (A) ; la zone de détermination de véhicule (P) est représentée par une zone fermée ; et **caractérisé en ce que** la zone de détermination de véhicule (P) est entourée par au moins deux lignes courbes parallèles au trajet de déplacement.

2. Le procédé de détermination de véhicule selon la revendication 1, comprenant : définition de la zone de détermination de véhicule (P) sur chacun d'un côté gauche et d'un côté droit par rapport à une direction de déplacement du véhicule objet (A) .

3. Le procédé de détermination de véhicule selon la revendication 1 ou 2, comprenant : définition d'une taille de la zone de détermination de véhicule (P) conformément à une vitesse du véhicule objet (A) et une vitesse de l'autre véhicule (B, C).

4. Le procédé de détermination de véhicule selon l'une quelconque des revendications 1 à 3, comprenant : définition d'une taille de la zone de détermination de véhicule (P) dans la direction perpendiculaire conformément à une largeur d'une file ou une largeur d'un véhicule.

5. Procédé de correction de trajet de déplacement comprenant : correction du trajet de déplacement conformément à un résultat de détermination déterminé par le procédé de détermination de véhicule selon l'une quelconque des revendications 1 à 4.

6. Le procédé de correction de trajet de déplacement selon la revendication 5, comprenant : lorsque l'autre véhicule (B, C) s'approche du véhicule objet (A), correction du trajet de déplacement de sorte que le véhicule objet (A) s'éloigne latéralement de l'autre véhicule (B, C).

7. Le procédé de correction de trajet de déplacement selon la revendication 5 ou 6, comprenant : lors d'une détermination que l'autre véhicule (B) est présent sur un côté gauche par rapport à une direction de déplacement du véhicule objet (A), correction du trajet de déplacement de sorte que le trajet de déplacement bascule vers un trajet sur un côté droit par rapport à une direction de déplacement.

8. le procédé de correction de trajet de déplacement selon l'une quelconque des revendications 5 à 7, comprenant : lors d'une détermination que l'autre véhicule (C) est présent sur un côté droit par rapport à une direction de déplacement du véhicule objet (A), correction du trajet de déplacement de sorte que le trajet de déplacement bascule vers un trajet sur un côté gauche par rapport à une direction de déplacement.

9. le procédé de correction de trajet de déplacement selon l'une quelconque des revendications 5 à 8, comprenant :

lors d'une détermination que l'autre véhicule (B) est présent sur un côté gauche par rapport à une direction de déplacement du véhicule objet (A) et qu'un autre véhicule (C) est encore présent sur un côté droit par rapport à la direction de déplacement du véhicule objet (A), définition d'une distance plus courte d'une distance entre véhicule côté gauche et une distance entre véhicule côté droit en tant que limite supérieure de quantité de correction ;

calcul d'une quantité de correction inférieure à la limite supérieure de quantité de correction conformément au résultat de détermination ; et

correction du trajet de déplacement au moyen de la quantité de correction calculée.

10. Le procédé de correction de trajet de déplacement selon l'une quelconque des revendications 5 à 8, comprenant :

calcul d'une quantité de correction conformément à au moins une valeur d'une position et d'une vitesse de l'autre véhicule détecté (B, C) ; et
correction du trajet de déplacement au moyen de la quantité de correction calculée.

11. Le procédé de correction de trajet de déplacement selon l'une quelconque des revendications 5 à 8, comprenant :

calcul d'une quantité de correction pour corriger le trajet de déplacement ;
correction du trajet de déplacement en ajoutant la quantité de correction au trajet de déplacement avant correction ; et
augmentation de la quantité de correction dans le temps.

12. le procédé de correction de trajet de déplacement selon l'une quelconque des revendications 5 à 8, comprenant :

lorsque la position de l'autre véhicule détecté (B, C) s'inscrit dans la zone de détermination de véhicule (P), détermination que l'autre véhicule (B, C) est présent latéralement au véhicule objet (A) ;
calcul d'une quantité de correction pour corriger le trajet de déplacement ;
correction du trajet de déplacement en ajoutant la quantité de correction au trajet de déplacement avant correction ; et
lorsque la position de l'autre véhicule (B, C) à déterminer devient un état de sortie de la zone de détermination de véhicule (P) au cours d'une correction du trajet de déplacement, diminution de la quantité de correction dans le temps.

13. le procédé de correction de trajet de déplacement selon l'une quelconque des revendications 5 à 12, comprenant :
correction du trajet de déplacement en basculant le trajet de déplacement avant correction dans la direction perpendiculaire.

14. Dispositif de détermination de véhicule comprenant :

un capteur (230) acquérant des informations externes d'un véhicule objet (A) ; et
un processeur (11) exécutant un autre processus de détermination de véhicule,
le capteur (230) étant configuré pour détecter un autre véhicule (B, C) positionné dans une direction perpendiculaire à une direction tangentielle d'un trajet de déplacement du véhicule objet (A),
le processeur (11) étant configuré pour :

calculer, au cours d'un déplacement du véhicule objet (A) dans une file de forme courbe, le trajet de déplacement représenté par une trajectoire d'une ligne courbe le long de la file de forme courbe ;
définition d'une zone de détermination de véhicule (P), dans lequel
la zone de détermination de véhicule (P) est définie latéralement à une position du véhicule objet (A) ;
lorsqu'une position de l'autre véhicule (B, C) détecté par le capteur (230) s'inscrit dans la zone de détermination de véhicule (P), il est déterminé que l'autre véhicule (B, C) est présent latéralement au véhicule objet (A) ;
la zone de détermination de véhicule (P) est représentée par une zone fermée ; et
**caractérisé en ce que**
la zone de détermination de véhicule (P) est entourée par au moins deux lignes courbes parallèles au trajet de déplacement.

15. Dispositif de correction de trajet de déplacement comprenant le dispositif de détermination de véhicule selon la revendication 14,

le processeur (11) étant configuré en outre pour corriger le trajet de déplacement conformément à un résultat de détermination lorsqu'une détermination que l'autre véhicule (B, C) est présent latéralement au véhicule objet (A).

# Fig.1

**Driving assistance system (1)**

**Driving assistance apparatus (100)**

Drive planning device (10)
Processor (11)

Output device (20)
Output control processor (21)

Communication device (30)

**Onboard apparatus (200)**

Vehicle controller (210)

Navigation device (220)
Position detection
device (221)
Map information (222)
Road information (223)

Object detection device (230)
Camera (231)
Radar device (232)

Output device (240)
Display (241)
Speaker (242)

Detection device (250)
Steering angle sensor (251)
Vehicle speed sensor (252)
Attitude sensor (253)

Drive device (260)
Braking device (261)

Steering device (270)

EP 3 525 192 B1

# Fig.2

# Fig.3

B

$P_B$

X

$\dfrac{V_A - V_B}{T}$

A

$-\dfrac{W}{2}$

$-\dfrac{3W}{2}$

Y

$\dfrac{3W}{2}$

$\dfrac{W}{2}$

$P_C$

C

$\dfrac{V_A - V_C}{2}$

Fig.4

# Fig.5

```
                    ┌─────────────┐
                    │    start    │
                    └─────────────┘
                           │
                           ▼
        ┌──────────────────────────────────────┐
  S1 ───┤      Acquire subject vehicle information │
        └──────────────────────────────────────┘
                           │
                           ▼
        ┌──────────────────────────────────────┐
  S2 ───┤        Acquire external information     │
        └──────────────────────────────────────┘
                           │
                           ▼
        ┌──────────────────────────────────────┐
  S3 ───┤          Calculate travel route         │
        └──────────────────────────────────────┘
                           │
                           ▼
        ┌──────────────────────────────────────┐
  S4 ───┤     Set vehicle determination region    │
        └──────────────────────────────────────┘
                           │
                           ▼
  S5 ───<      Another vehicle present?      >─── N
                           │ Y                      │
                           ▼                        │
        ┌──────────────────────────────────────┐   │
  S6 ───┤        Calculate correction amount      │   │
        └──────────────────────────────────────┘   │
                           │                        │
                           ▼                        │
        ┌──────────────────────────────────────┐   │
  S7 ───┤        Correct planned travel route     │   │
        └──────────────────────────────────────┘   │
                           │◄───────────────────────┘
                           ▼
                    ┌─────────────┐
                    │     end     │
                    └─────────────┘
```

**EP 3 525 192 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005524135 W
- WO 2016051460 A1